# EUROPÄISCHE PATENTANMELDUNG

(11) **EP 4 557 453 A2**
(43) Veröffentlichungstag der Anmeldung: **21.05.2025**
(21) Anmeldenummer: 25153036.6
(22) Anmeldetag: 02.12.2020
(51) Int. Cl.: H01M 10/54

(54) **VERFAHREN ZUM AUFSCHLIESSEN VON ELEKTRO-CHEMISCHEN ENERGIESPEICHERN SOWIE THERMISCHE BEHANDLUNGSANLAGE**

(30) Priorität: 11.12.2019 DE 102019133914
(62) Teilanmeldung aus: 20211167.0
(71) Anmelder: ACCUREC-Recycling Gesellschaft mbH, 45472 Mülheim an der Ruhr (DE)
(72) Erfinder: Sojka, Reiner, 40545 Düsseldorf (DE); Melber, Albrecht, 64287 Darmstadt (DE)
(74) Vertreter: Haverkamp Patentanwälte PartG mbB

(57) **Zusammenfassung**

Offenbart ist ein Verfahren zum Aufschließen thermischen Behandeln von elektro-chemischen Energiespeichern im Zusammenhang mit einem anschließenden Zurückgewinnen von darin enthaltenen Wertstoffen als Sekundärrohstoffe, bei welchem Verfahren die Energiespeicher durch eine thermische Behandlung zum Entfernen des Elektrolyten und reaktiver Substanzen aufgeschlossen werden, bevor in einem nachgeschalteten Prozess das thermisch behandelte Material einer Aufbereitung unterworfen wird, durch die in dem thermisch behandelten Material befindliche Sekundärrohstoffe voneinander getrennt werden. Besonderes Kennzeichen ist, dass die thermische Behandlung in einem indirekt beheizten Ofen (2) unter atmosphärischen Druckbedingungen oder einem geringen Überdruck gegenüber dem Umgebungsdruck von bis zu 20 mbar und in reduzierender Atmosphäre durchgeführt wird und dass über die reduzierende Atmosphäre als Steuergröße Einfluss auf den Verlauf des thermischen Behandlungsprozesses genommen wird.

Offenbart ist ferner eine entsprechende Behandlungsanlage zum thermischen Behandeln von elektro-chemischen Energiespeichern.

## Beschreibung

Die Erfindung betrifft ein Verfahren zum Aufschließen von elektro-chemischen Energiespeichern im Zusammenhang mit einem anschließenden Zurückgewinnen von darin enthaltenen Wertstoffen als Sekundärrohstoffe, bei welchem Verfahren die Energiespeicher durch eine thermische Behandlung zum Entfernen des Elektrolyten und reaktiver Substanzen aufgeschlossen werden, bevor in einem nachgeschalteten Prozess das thermisch behandelte Material einer Aufbereitung unterworfen wird, durch die in dem thermisch behandelten Material befindliche Sekundärrohstoffe voneinander getrennt werden. Beschrieben ist des Weiteren eine thermische Behandlungsanlage zum thermischen Aufschließen von elektro-chemischen Energiespeichern.

Elektro-chemische Energiespeicher sind wiederaufladbare Batterien, wie etwa Lithium-Ionen-Akkumulatoren, Nickel-Metallhydrid-Akkumulatoren und Elektrolytkondensatoren. Derartige Energiespeicher, insbesondere Lithium-Ionen-Akkumulatoren werden als sogenannte Stand-alone-Batterien, jedoch in größerem Umfange auch in Form von Batteriemodulen zum Betreiben elektrischer Verbraucher, wie mobile Computer, Mobiltelefone, Powertools und in zunehmendem Maße auch im Zusammenhang mit der Elektromobilität, insbesondere in Bezug auf Kraftfahrzeuge verwendet. Die elektro-chemischen Energiespeicher, die für Kraftfahrzeuge eingesetzt werden, müssen eine hohe Speicherdichte aufweisen und die erforderliche Leistung bevorraten können. Bei diesen Energiespeichern handelt es sich in vielen Fällen um Hochvoltbatterien.

Der weltweit zu beobachtende zunehmende Einsatz derartiger elektro-chemischer Energiespeicher, vor allem im Zusammenhang mit der zunehmenden Elektromobilität, führt zu einem wachsenden Aufkommen an ausgedienten Energiespeichern, sogenannten End-of-Life-Batterien bzw. -Batteriemodulen. Die zum Befriedigen der erhöhten Nachfrage höheren Produktionsraten haben zur Folge, dass auch der Produktionsausschuss von der Menge her zunimmt. Zudem sind die natürlichen Ressourcen, aus denen die für die Herstellung derartiger Energiespeicher benötigten Elemente gewonnen werden, begrenzt. Vor diesem Hintergrund sind verschiedene Ansätze vorgeschlagen worden, aus den nicht mehr verwendbaren elektro-chemischen Energiespeichern - und zwar sowohl End-of-Life-Batterien bzw. -Batteriemodule ebenso wie Produktionsausschuss - die darin enthaltenen Rohstoffe als Sekundärrohstoffe zurückzugewinnen. Damit sich ein solches Verfahren am Markt etablieren kann, muss dieses beherrschbar und mit vertretbaren Kosten durchführbar sein. Zudem muss ein solches Verfahren geeignet sein, dass mit diesem auch größere Mengen, mehrere 1.000 t pro Jahr behandelt werden können.

Nicht unproblematisch ist bei derartigen elektro-chemischen Energiespeichern, insbesondere wenn es sich hierbei um Lithium-Ionen-Akkumulatoren handelt, die thermische Reaktivität. Beschädigungen eines solchen Energiespeichers können leicht zu einem Entzünden derselben führen. Bauartbedingt können derartige Energiespeicher eine relativ hohe Restladung enthalten. Damit nachfolgende Zerkleinerungsschritte gefahrlos durchgeführt werden können, müssen die elektro-chemischen Energiespeicher durch Entladen zunächst inaktiviert werden. Dies erfolgt durch einen aktiv herbeigeführten Entladeprozess. Zu diesem Zweck werden die Energiespeicher beispielsweise in eine Entladeflüssigkeit oder in ein Entladegranulat gelegt. Um eine Entladung in Entladeflüssigkeit zu gewährleisten, müssen die Energiespeicher zuvor mechanisch geöffnet werden, damit die Entladeflüssigkeit in das Gehäuse eindringen kann, da die Batterie- bzw. Batteriemodulkontakte in der Entladeflüssigkeit oxidieren und bereits nach kurzer Zeit den gewünschten Entladeprozess unterbinden. Bekannt ist auch, die thermische Reaktivität der Energiespeicher im Zusammenhang mit einer thermischen Behandlung derselben zu nutzen. Auf diese Weise kann zumindest ein Teil der für eine thermische (pyrolytische) Behandlung der Energiespeicher erforderliche Energie aus diesen bezogen werden.

Zur thermischen Behandlung von elektro-chemischen Energiespeichern kann ein Vakuumofen eingesetzt werden, in dem der therm ische Aufschluss erfolgt. Ein Betrieb ist nur batchweise möglich. Eingesetzt werden für den thermischen Aufschluss der Energiespeicher mitunter auch direkt beheizte Drehrohröfen, durch die die aufzuschließenden Energiespeicher hindurch transportiert werden. Der Durchsatz, mit dem ein solcher Drehrohrofen betrieben werden kann, ist aufgrund der thermischen Reaktivität der aufzuschließenden Energiespeicher von der zugeführten Energiespeichermenge abhängig. Soll die thermische Behandlung nur bis zu einer gewissen Maximaltemperatur durchgeführt werden, beispielsweise damit die zurückzugewinnenden Metalle (wozu auch die Übergangsmetalle zu zählen sind) nicht aufschmelzen, was für die nachgeschaltete Aufbereitung der pyrolytisch aufgeschlossenen Energiespeicher bevorzugt wird, ist der Durchsatz begrenzt. Die zurückzugewinnenden Sekundärrohstoffe, insbesondere die Übergangsmetalle, wie Eisen, Nickel und Kobalt, liegen am Ende der thermischen Behandlung zumeist in Oxidform vor und gehen in dieser Form in die nachgeschaltete Aufbereitung ein.

Aus der JP 2016-22395 A ist ein Verfahren und eine Vorrichtung zum Recyceln von Lithium-Ionen-Altbatterien bekannt, bei dem die ungeöffneten Altbatterien in einen feuerfesten Behälter eingelegt und mit dem feuerfesten Behälter in einen Wärmebehandlungsofen eingebracht werden. In dem Wärmebehandlungsofen werden die Altbatterien erwärmt und flüchtige Elektrolytlösungen entweichen aus dem feuerfesten Behälter in den Wärmebehandlungsofen. Durch die Entstehung der flüchtigen Gase im feuerfesten Behälter und dem Entweichen dieser in den Wärmeofen entsteht in dem feuerfesten Behälter eine reduzierende Atmosphäre, die einer Explosion der Lithium-Ionen-Altbatterien im Ofen entgegenwirkt. Neben der Elektrolytlösung in den Altbatterien werden auch brennbare Stoffe wie Kunststoffe thermisch zersetzt und in den Ofen überführt. Diese können im Ofen verbrannt werden und zur Beheizung des Ofens beitragen. Eine Regelung der Ofentemperatur wird über die Kontrolle der zugeführten Sauerstoffmenge vorgenommen. Für die Steuerung der Temperatur und des Drucks im Ofen weist dieser einen Temperatursensor und einen Drucksensor und jeweils eine dazugehörige Temperaturregelung und Druckregelung auf.

Ein weiteres Verfahren und eine Behandlungsvorrichtung für ein Batteriepack, welche die Durchführung eines sicheren Recyclingvorgangs ermöglichen, wird in der US 2014/0017624 A1 offenbart. Die vorbekannte Behandlungsvorrichtung weist einen Ofen zum Erhitzen des Batteriepacks, eine Versorgungseinheit zur Bereitstellung eines Ersatzgases, das in einen Raum des Ofens eingelassen und die dort vorhandene Atmosphäre ersetzt und einen Kondensator auf. Als Ersatzgas kann beispielsweise Wasserdampf oder ein Inertgas zugeführt werden, wodurch eine reduzierende Atmosphäre im Ofen geschaffen wird. Die entstehenden Thermolyseprodukte werden von dem Ofen über ein Rohrsystem zu dem Kondensator geleitet und dort kondensiert. Die entstehende Kondensatflüssigkeit wird in einen Abfallflüssigkeitstank überführt und dort gegebenenfalls weiter aufbereitet oder verbrannt.

Ein mehrstufiges Pyrolyseverfahren zur Aufbereitung von Lithium-Ionen-Batterien beschreibt CN 109193058 A. Bei diesem Verfahren werden zerlegte Lithium-Ionen-Batterien in einen Durchlaufofen eingebracht und auf eine niedrige Temperatur vorgeheizt. Anschließend erfolgt die Durchführung einer Pyrolyse bei Temperaturen zwischen 250 °C bis 500 °C, gefolgt von einem Abkühlen der Batterien auf 100 °C. Die einzelnen Pyrolyseschritte erfolgen im Unterdruck und in einer sauerstofffreien Umgebung. Die bei der Pyrolyse entstehenden Rauchgase werden aufgefangen und einer sekundären Verbrennung zugeführt. Anschließend erfolgt eine Aufbereitung des Rauchgases, um vorhandene Säuren, Schadstoffe und Stäube aus dem Rauchgas zu entfernen.

Ein Verfahren und eine Vorrichtung zur thermischen Behandlung von Altbatterien sind zudem in der US 5 735 933 A beschrieben. Dabei können metallischen Substanzen aus den Batterien zurückgewonnen und in nicht schädliche Rückstände umgewandelt werden. US 5 735 933 A offenbart hierfür zwei verschiedene Vorrichtungen, die dazu vorgesehen sind Abfallbatterien in einem Vakuumofen, in dem die Ofentemperatur schrittweise erhöht werden kann, um die in der Batterie enthaltenden metallischen Beschichtungsstrukturen und Nichtmetalle, die die versiegelten Strukturen der Batterien bilden, zu verdampfen. Die dabei entstehenden Verdampfungsgase der Materialien, die in Stufen mit jedem erreichten Temperaturniveau entstehen, werden aus dem Ofen mittels Vakuum abgesaugt und anschließend gesammelt und getrennt. Hierfür weist die Vorrichtung einen Wärmebehandlungsofen, eine Vakuumpumpe zum Abziehen des Metalldampfes bzw. der Nicht-Metallgase aus dem Ofen, Evakuierungsmittel, nicht-oxidierende Gaszufuhrmittel, nicht oxidierende Hochtemperaturgas-Speichermittel, Sammelmittel und Kondensationsmittel für den Metalldampf und Sammelmittel und Absorptionsmittel für nicht metallische Dämpfe auf.

Ausgehend von dem eingangs diskutierten Stand der Technik liegt der Erfindung die Aufgabe zugrunde, den Prozess des Aufschließens von elektro-chemischen Energiespeichern, insbesondere Lithium-Ionen-Akkumulatoren im Hinblick auf ein verbessertes Kosten-Nutzen-Verhältnis zu optimieren.

Gelöst wird diese Aufgabe erfindungsgemäß durch ein eingangs genanntes, gattungsgemäßes Verfahren, bei dem die thermische Behandlung in einem indirekt beheizten Ofen unter atmosphärischen Druckbedingungen oder einem geringen Überdruck gegenüber dem Umgebungsdruck von bis zu 20 mbar und in reduzierender Atmosphäre durchgeführt wird und bei dem über die reduzierende Atmosphäre als Steuergröße Einfluss auf den Verlauf des thermischen Behandlungsprozesses genommen wird.

Gelöst wird diese Aufgabe auch durch eine thermische Behandlungsanlage zum Entfernen von Elektrolyten und reaktiver Substanzen in elektro-chemischen Energiespeichern zum Durchführen des vorgenannten Verfahrens, umfassend
- einen indirekt beheizten Ofen mit zumindest einer von der Ofenumgebung atmosphärisch getrennten thermischen Behandlungskammer,
   - zumindest eine Schleuse zum Beschicken der Behandlungskammer und zur Entnahme des thermisch behandelten Materials,
- eine Erwärmungseinrichtung zum indirekten Zuführen von Wärme in die Behandlungskammer,
- eine Absaugeinrichtung zum Absaugen von bei der thermischen Behandlung der elektro-chemischen Energiespeicher in der Behandlungskammer entstehenden gasförmigen Verdampfungs- und Zersetzungsprodukten,
- eine thermische Nachverbrennung zur Reinigung der durch die Absaugeinrichtung aus der Behandlungskammer abgesaugten Gase mit einer Wärmerückgewinnung, wobei die zurückgewonnene Wärme zum Erwärmen der Behandlungskammer genutzt wird und
- eine Einrichtung zum Überwachen der in der Behandlungskammer herrschenden Atmosphäre in Bezug auf darin gewünschte reduzierende atmosphärische Bedingungen.

Bei diesem Verfahren - gleiches gilt sinngemäß auch für die beanspruchte thermische Behandlungsanlage - erfolgt der thermische Aufschluss der elektro-chemischen Energiespeicher in einem indirekt beheizten Ofen, und zwar zumindest weitgehend unter atmosphärischen Druckbedingungen und in reduzierender Atmosphäre. Eingesetzt werden kann hierfür ein Ofen, in dem die thermische Behandlung der Energiespeicher batchweise (chargenweise) vorgenommen wird, ebenso wie ein Durchlaufofen, durch den die aufzuschließenden Energiespeicher, typischerweise eine Vielzahl derselben in einem Gebinde befindlich, hindurch transportiert werden. Von Besonderheit bei diesem Verfahren ist, dass die thermische Behandlung in reduzierender Atmosphäre durchgeführt wird. Dies heißt nicht, dass der gesamte thermische Behandlungsprozess in reduzierender Atmosphäre in der Behandlungskammer des Ofens durchzuführen ist, sondern dass eine reduzierende Atmosphäre bei denjenigen Behandlungstemperaturen vorhanden ist, bei denen die Elektrolytverbindungen verdampft bzw. aufgebrochen werden. Infolge der reduzierenden Atmosphäre ist Sorge dafür getragen, dass die in den Energiespeichern enthaltenen Metalle, wie Aluminium, Eisen, Nickel und Kobalt, jedenfalls mengenmäßig mehrheitlich keine Oxidverbindungen eingehen. Zumindest Eisen, Nickel und Kobalt können, wenn nicht als Oxide vorliegend, im Rahmen der nachgeschalteten Aufbereitung zum Separieren der Wertstofffraktionen auf einfache Weise im Wege einer Magnetabscheidung aus dem im Rahmen der Aufbereitung zerkleinerten Material extrahiert werden. Somit ist ein ansonsten in der nachgeschalteten Aufbereitung erforderlicher Prozessschritt des Aufschließens der Metalloxide nicht mehr oder nur noch für eine kleinere Fraktion der Metalle erforderlich, was sich kostensenkend bezüglich des Recyclingprozesses auswirkt.

Die reduzierende Atmosphäre in der Behandlungskammer des Ofens wird durch die gasförmigen Verdampfungsprodukte, vor allem jedoch durch die bei einer sich an die Verdampfungsphase anschließenden höheren Temperatur entstehenden gasförmigen Zersetzungsprodukte bereitgestellt. Es wird Sorge dafür getragen, dass keine oder nur eine nicht nennenswerte Menge an Umgebungsluft während der thermischen Behandlung in die Behandlungskammer eindringt. Zudem wird Sorge dafür getragen, dass über die Absaugung nur eine solche Gasmenge abgezogen wird, dass die gewünschte reduzierende Atmosphäre in der Behandlungskammer erhalten bleibt. Die reduzierende Atmosphäre in der Behandlungskammer begrenzt auch die thermische Reaktivität der elektro-chemischen Energiespeicher. Dieses macht man sich zunutze, um über die Einstellung der reduzierenden Atmosphäre Einfluss auf den Verlauf der thermischen Behandlung der Energiespeicher zu nehmen. Je reduzierender die Atmosphäre in der Behandlungskammer des Ofens ist, desto geringer ist die thermische Reaktivität der Energiespeicher aufgrund des reduzierten Sauerstoffgehaltes. Daher ist der mögliche Durchsatz bei diesem Verfahren nicht durch die in den Ofen eingebrachte Energiespeichermenge begrenzt. Damit kann dieses Verfahren trotz Ausnutzens der in den Energiespeichern enthaltenen Restladung als Energiequelle zum Durchführen der thermischen Behandlung mit einem deutlich größeren Durchsatz zu behandelnder Energiespeicher durchgeführt werden. Aufgrund der vorbeschriebenen Kontrolle der thermischen Reaktivität der Energiespeicher kann die thermische Behandlung unter atmosphärischen Druckbedingungen und damit auch in einem Durchlaufofen durchgeführt werden. Hierdurch können Prozesszeiten reduziert werden.

Die Behandlungskammer des Ofens ist an eine Absaugung zum Abziehen von durch die thermische Behandlung entstehender Gase angeschlossen. Die Absaugung wird dergestalt betrieben, dass innerhalb der Behandlungskammer eine reduzierende Atmosphäre verbleibt. Vor dem Hintergrund, dass die zum Einstellen der reduzierenden Atmosphäre benötigten Gasbestandteile insgesamt, zumindest jedoch weitgehend durch die thermische Behandlung der Energiespeicher selbst erzeugt werden, kann über die Einstellung des aus der Behandlungskammer des Ofens abgesaugten Volumenstroms der Grad der reduzierenden Atmosphäre eingestellt werden. Sollten die durch die thermische Behandlung der Energiespeicher im Behandlungsraum entstehenden reduzierenden Gase nicht ausreichen, das gewünschte reduzierende Milieu innerhalb der Behandlungskammer einzustellen, kann ein Reduktionsmittel, typischerweise gasförmig, von außen in die Behandlungskammer eingebracht werden.

Damit sich mögliche Leckagen in der Behandlungskammer des Ofens nicht nachteilig auf die Einstellung der reduzierenden Atmosphäre bemerkbar machen, ist typischerweise vorgesehen, dass die thermische Behandlung mit einem geringen Überdruck innerhalb der Behandlungskammer gegenüber dem Umgebungsdruck durchgeführt wird. Ein Überdruck von wenigen mbar, insbesondere zwischen 1 bis 10 mbar wird als ausreichend angesehen. Der bei einer solchen Ausgestaltung in der Behandlungskammer vorgesehene geringe Überdruck gegenüber Umgebungsbedingung ist deswegen mit max. 20 mbar und vorzugsweise auf max. 10 mbar beschränkt, damit durch unter Umständen vorhandene Leckagen die in der Behandlungskammer eingestellte reduzierte Atmosphäre nicht, jedenfalls nicht in nennenswertem Maße entweichen kann. Eingestellt wird der Überdruck in der Behandlungskammer über die Absaugung, durch die, wie vorstehend aufgezeigt, auch die Einstellung der Atmosphäre erfolgt. Zu diesem Zweck befindet sich innerhalb der Behandlungskammer zumindest ein Drucksensor. Der genannte Überdruck von 20 mbar, vorzugsweise von maximal 10 mbar gegenüber Umgebungsdruck wird im Rahmen dieser Ausführungen unter dem verwendeten Begriff der "Atmosphärischen Druckbedingungen" verstanden. Gemäß einem Ausführungsbeispiel wird innerhalb der Behandlungskammer ein um 5 mbar gegenüber Umgebungsdruck höherer Druck eingestellt.

Die thermische Behandlung der aufzuschließenden Energiespeicher wird vorzugsweise in mehreren zeitlich aufeinanderfolgenden Temperaturstufen innerhalb der Behandlungskammer des Ofens vorgenommen. Dabei ist vorgesehen, dass die Energiespeicher in jeder Temperaturstufe für eine gewisse Zeitspanne verbleiben, bevor die thermische Behandlung in der nächsten Temperaturstufe, typischerweise mit einer höheren Temperatur, fortgesetzt wird. Dieses kann durch entsprechende Temperaturführung in einem batchweise betriebenen Ofen ebenso vorgenommen werden, wie in einem Durchlaufofen. In einem Durchlaufofen befinden sich die einzelnen Temperaturstufen in Förderrichtung der durch den Ofen transportierten Energiespeicher hintereinander liegend. Um die Ofenstrecke kürzer auszulegen, ist in einem Ausführungsbeispiel vorgesehen, die Energiespeicher getaktet durch den Ofen zu transportieren, wobei die typischerweise in einem Gebinde, etwa nach Art einer Gitterbox transportierten Energiespeicher in einer Temperaturstufe für eine gewisse Zeit verbleiben, bevor infolge der getakteten Förderung dieses Gebinde der nächsten Temperaturstufe zugeführt wird. In den aufeinanderfolgenden Temperaturstufen werden die Energiespeicher sukzessive bis auf ihre Maximaltemperatur erwärmt.

Vorteilhaft bei einer solchen Auslegung des Verfahrens ist, dass die gasförmigen Verdampfungs- und Zersetzungsprodukte der Substanzen der Energiespeicher nicht mehr oder weniger gleichzeitig bzw. in sehr kurzer Zeit aufeinander folgend, sondern zeitlich getrennt nacheinander erzeugt werden. Dieses hat Vorteile für den Betrieb einer thermischen Nachverbrennung, da dann die hierfür als Energieträger zum Betreiben der thermischen Nachverbrennung mitgenutzten Kohlenwasserstoffe über die thermische Behandlungsdauer verteilt der thermischen Nachverbrennung zugeführt werden. Zudem erlaubt eine solche thermische Behandlung, dass in einer ersten Temperaturstufe die Energiespeicher durch entsprechend hohen Dampfdruck der sich in diesen zersetzenden Elektrolyten geöffnet und diese als Gasphase austreten. Dieses erfolgt bei einer Temperatur von etwa 160 bis 200 °C. Eine Verdampfung von Elektrolytmaterial, wie beispielsweise Ethylmethylcarbonat, Ethylencarbonat und/oder Dimethylcarbonat, zeitlich vor einer weiteren thermischen Behandlung bei höherer Temperatur zum Zersetzen von vorhandenem Material erlaubt, dass Verdampfungsprodukte bzw. Teile davon, wenn gewünscht, zurückgewonnen werden können, beispielsweise durch Kondensation typischerweise an einen Oberflächenkondensator. Auf diese Weise können auch diese Stoffe zumindest teilweise aus den zu recycelnden Energiespeichern rückgewonnen werden, bevor die Abgase der thermischen Nachverbrennung zugeführt werden.

In der auf die erste Temperaturstufe folgenden zweiten Temperaturstufe, die sodann bei etwa 200 °C beginnt, lösen sich die Kunststoffseparatoren, zumeist aus PP oder PE auf. Durch die beginnende pyrolytische Zersetzung dieser Produkte entstehen wiederum Prozessgase mit chemisch reduzierenden Eigenschaften. Auch diese werden abgesaugt und der thermischen Nachverbrennung zugeführt. Sind die Separatoren hinreichend zersetzt, sind die in den Energiespeichern vorhandenen Energiespeicherzellen kurz geschlossen. Dieser Entladeprozess triggert eine exotherme Reaktion, wobei die dabei entstehende Wärme energetisch für die Erwärmung der Behandlungskammer in dem Ofen und damit der darin befindlichen Energiespeicher genutzt werden kann. Der pyrolytische Aufschluss in dieser zweiten Temperaturzone unter reduzierenden Bedingungen führt dazu, dass die als Sekundärrohstoffe zurückzugewinnenden Metalle bezüglich ihres jeweiligen Anteils jedenfalls mehrheitlich keine Oxidverbindung eingehen. Dieses vereinfacht den nachgeschalteten Aufbereitungsprozess.

In Folge der atmosphärischen Umgebung innerhalb der Behandlungskammer wird die durch Restentladung generierte Wärme, in dem die elektro-chemischen Energiespeicher enthaltenen Gebinde umgewälzt, mithin die Erwärmung intensiviert. Dieses reduziert die erforderliche Prozesszeit.

Die thermische Behandlung wird vorzugsweise bis zu einer maximalen Erwärmungstemperatur durchgeführt, die unterhalb der Schmelztemperatur des niedrigstschmelzenden, in den Energiespeichern enthaltenen zurück zu gewinnenden Elements aus der Gruppe der Metalle und Übergangsmetalle liegt. Typischerweise ist Aluminium in derartigen Energiespeichern enthalten. Aus der Gruppe der zurück zu gewinnenden Metalle - Al, Ni, Fe, Co - ist Aluminium dasjenige Metall mit dem niedrigsten Schmelzpunkt. Daher wird man diese maximale Erwärmungstemperatur der elektro-chemischen Energiespeicher in der Behandlungskammer auf eine Temperatur beschränken, die unterhalb der Schmelztemperatur von Aluminium liegt. Bei einem Ausführungsbeispiel des Verfahrens werden die thermisch aufzuschließenden Energiespeicher nur auf eine Maximaltemperatur von etwa 600 °C gebracht.

In einer Weiterbildung einer solchen thermischen Behandlungsanlage mit mehreren aufeinanderfolgenden Temperaturzonen ist vorgesehen, dass die Absaugung in jeder Temperaturzone unabhängig von derjenigen in den benachbarten Temperaturzonen betrieben werden kann. Auf diese Weise lässt sich die reduzierende Atmosphäre in jeder Temperaturzone beeinflussen. Möglich ist es auch, dass in jede Temperaturzone eine Stoffzufuhr zum Zuführen eines Reaktionsstoffes mündet, um die thermische Behandlung zu beeinflussen und/oder um zurück zu gewinnende Sekundärrohstoffe in eine bestimmte Bindung zu bringen.

Zwischen den einzelnen Temperaturstufen kann eine Ofenwand angeordnet sein. Hierbei muss es sich nicht um eine Schleuse handeln.

Handelt es sich bei der thermischen Behandlungsanlage um einen Durchlaufofen, kann eine Temperaturzone durchaus in mehrere Heizzonen unterteilt sein, in denen die thermisch zu behandelnden Energiespeicher sukzessive auf die Maximaltemperatur dieser Heizzone erwärmt werden.

Zweckmäßig ist es, wenn nach dem Erwärmen der Energiespeicher auf die maximale Erwärmungstemperatur diese anschließend gekühlt werden, bevor sie aus dem Ofen entnommen werden. Dieser Kühlvorgang kann genutzt werden, um dem abkühlenden pyrolytisch aufgeschlossenen Material ein Fluid zuzuführen, etwa um eine Umwandlung von Verbindungen bereits im Zusammenhang mit dem pyrolytischen Aufschluss zu bewirken, wodurch die nachfolgende Aufbereitung entlastet wird. Eine solche Maßnahme kann sich beispielsweise in Bezug auf Lithium-Verbindungen anbieten. Durch ein Einleiten von CO₂ während des Kühlvorganges in den Ofen wird das Lithium zu Lithiumcarbonat gebunden.

CO₂ wird vorzugsweise auch in die Behandlungskammer eingeleitet, um freiwerdendes Lithium als Lithiumcarbonat in der Behandlungskammer zu binden.

Nachstehend werden einzelne mögliche Aspekte nochmals zusammengefasst. Die verschiedenen Aspekte beziehen sich auf das durchzuführende Verfahren sowie auf die thermische Behandlungsanlage und lauten wie folgt:
**1.** Verfahren zum Aufschließen von elektro-chemischen Energiespeichern im Zusammenhang mit einem anschließenden Zurückgewinnen von darin enthaltenen Wertstoffen als Sekundärrohstoffe, bei welchem Verfahren die Energiespeicher durch eine thermische Behandlung zum Entfernen des Elektrolyten und reaktiver Substanzen aufgeschlossen werden, bevor in einem nachgeschalteten Prozess das thermisch behandelte Material einer Aufbereitung unterworfen wird, durch die in dem thermisch behandelten Material befindliche Sekundärrohstoffe voneinander getrennt werden, wobei die thermische Behandlung in einem indirekt beheizten Ofen unter atmosphärischen Druckbedingungen oder einem geringen Überdruck gegenüber dem Umgebungsdruck von bis zu 20 mbar und in reduzierender Atmosphäre durchgeführt wird und dass über die reduzierende Atmosphäre als Steuergröße Einfluss auf den Verlauf des thermischen Behandlungsprozesses genommen wird.
**2.** Verfahren nach Aspekt 1, wobei die reduzierende Atmosphäre in dem Ofen über eine Absaugeinrichtung zum Abziehen von durch die thermische Behandlung entstehenden Gasen gesteuert wird.
**3.** Verfahren nach Aspekt 1 oder 2, wobei die thermische Behandlung in mehreren aufeinanderfolgenden Temperaturzonen vorgenommen wird und die aufzuschließenden Energiespeicher in jeder Temperaturzone für eine gewisse Zeitspanne verbleiben, bevor die Behandlung in der nächsten Temperaturzone fortgesetzt wird.
**4.** Verfahren nach Aspekt 2 oder 3, wobei die aus dem Ofen abgesaugten Gase einer therm ischen Nachverbrennung zugeführt werden und die dabei entstehende Wärme über einen Wärmetauscher für die Beheizung des Ofens genutzt wird.
**5.** Verfahren nach Aspekt 3 und 4, wobei in einer ersten Temperaturzone die aufzuschließenden Energiespeicher zum Verdampfen von darin enthaltenem organischem Elektrolytmaterial erwärmt werden und dass in einer nachfolgenden Temperaturzone der weitere thermische Aufschluss bei gegenüber der Temperatur in der ersten Temperaturzone höherer Temperatur zum Zersetzen von in der ersten Temperaturzone entstandenen Verdampfungsprodukten und/oder Produktresten sowie vorhandener Kunststoffe vorgenommen wird.
**6.** Verfahren nach einem der Aspekte 3 bis 5, wobei im Anschluss an die Temperaturzone, in der die aufzuschließenden Energiespeicher auf ihre maximale Temperatur erwärmt werden, die thermisch aufgeschlossenen Energiespeicher gekühlt werden.
**7.** Verfahren nach einem der Aspekte 1 bis 6, wobei über eine Absaugeinrichtung während des Prozesses der thermischen Behandlung innerhalb des Ofens durch den thermischen Aufschluss der Energiespeicher entstehende Gase abgesaugt und aus dem abgesaugten Gas darin enthaltene Verdampfungs- und/oder Zersetzungsprodukte, insbesondere Elektrolyte, durch Kondensation zurückgewonnen werden.
**8.** Verfahren nach einem der Aspekte 1 bis 7, wobei zur Beeinflussung der thermischen Behandlung Reaktionsstoffe in einer Behandlungskammer des Ofens oder diejenige einer Kühlstrecke eingebracht werden.
**9.** Verfahren nach einem der Aspekte 1 bis 8, wobei als Ofen ein als Durchlaufofen konzipierter Tunnelofen verwendet wird, durch den die thermisch aufzuschließenden Energiespeicher in Gebinden mit einer Fördereinrichtung transportiert werden.
**10.** Verfahren nach einem der Aspekte 1 bis 9, wobei zum Zurückgewinnen der in den thermisch aufgeschlossenen Energiespeicher enthaltenen Sekundärrohstoffe, dem thermischen Aufschlussprozess nachgeschaltet, eine Aufbereitung der thermisch aufgeschlossenen, inaktivierten Energiespeicher durchgeführt wird.
**11.** Thermische Behandlungsanlage zum Entfernen von Elektrolyten und reaktiver Substanzen in elektro-chemischen Energiespeichern zum Durchführen des Verfahrens nach einem oder mehreren der Aspekte 1 bis 10, umfassend:
   - einen indirekt beheizten Ofen mit zumindest einer von der Ofenumgebung atmosphärisch getrennten thermischen Behandlungskammer,
   - zumindest eine Schleuse zum Beschicken der Behandlungskammer und zur Entnahme des thermisch behandelten Materials,
   - eine Erwärmungseinrichtung zum indirekten Zuführen von Wärme in die Behandlungskammer,
   - eine Absaugeinrichtung zum Absaugen von bei der thermischen Behandlung der elektro-chemischen Energiespeicher in der Behandlungskammer entstehenden gasförmigen Verdampfungs- und Zersetzungsprodukten,
   - eine thermische Nachverbrennung zur Reinigung der durch die Absaugeinrichtung aus der Behandlungskammer abgesaugten Gase mit einer Wärmerückgewinnung, wobei die zurückgewonnene Wärme zum Erwärmen der Behandlungskammer genutzt wird und
   - eine Einrichtung zum Überwachen der in der Behandlungskammer herrschenden Atmosphäre in Bezug auf darin gewünschte reduzierende atmosphärische Bedingungen.
**12.** Behandlungsanlage nach Aspekt 11, wobei der Ofen ein als Durchlaufofen konzipierter Tunnelofen mit mehreren, in Förderrichtung der thermisch zu behandelnden Energiespeicher aufeinanderfolgenden Temperaturzonen unterschiedlicher Erwärmungstemperatur ist.
**13.** Behandlungsanlage nach Aspekt 12, wobei eine erste Temperaturzone zum Erwärmen der aufzuschließenden Energiespeicher auf die Elektrolytverdampfungstemperatur vorgesehen ist und dass die Absaugeinrichtung die aus dieser ersten Temperaturzone abgesaugten gasförmigen Verdampfungsprodukte an einen Kondensator zum Kondensieren von verdampftem Elektrolytmaterial fördert.
**14.** Behandlungsanlage nach Aspekt 13, wobei sich an die Temperaturzone, in der die thermisch zu behandelnden elektro-chemischen Energiespeicher auf ihre Maximaltemperatur erwärmt werden, eine Kühlstrecke anschließt.
**15.** Behandlungsanlage nach einem der Aspekte 11 bis 14, wobei in die Behandlungskammer des Ofens eine oder mehrere Stoffzufuhren münden, über die Stoffe zum Beeinflussen der thermischen Behandlung der Energiespeicher zugeführt werden können.

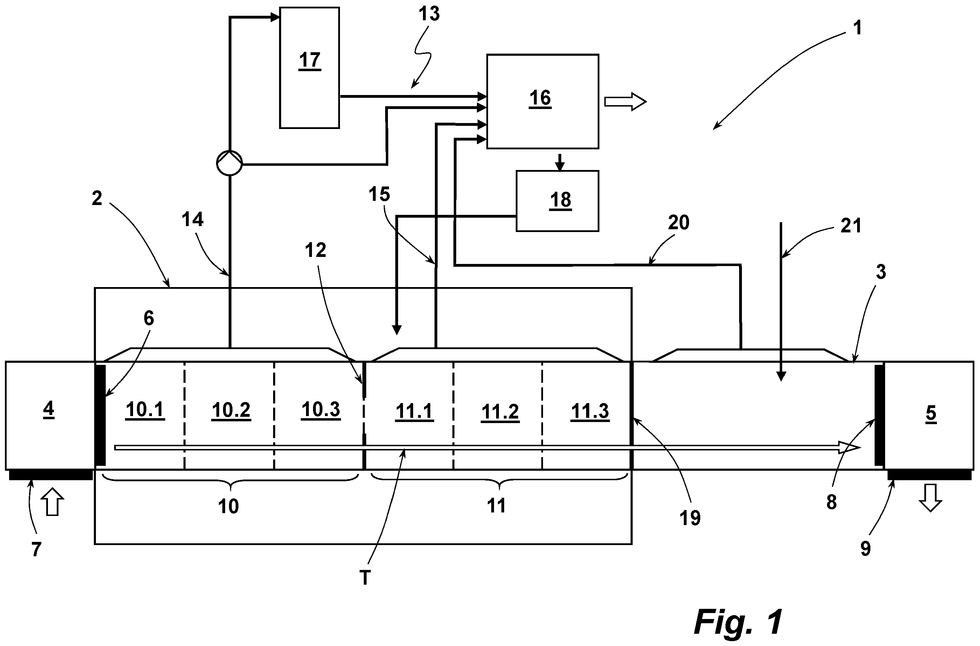

Nachfolgend ist die Erfindung unter Bezugnahme auf die beigefügte **Figur 1** anhand eines Ausführungsbeispiels erläutert. Figur 1 zeigt nach Art eines Blockschaltbildes eine thermische Behandlungsanlage 1 zum Entfernen von Elektrolyten und reaktiver Substanzen in elektro-chemischen Energiespeichern, und mithin zum pyrolytischen Aufschließen derselben. Die thermische Behandlungsanlage 1 wird eingesetzt, um elektro-chemische Energiespeicher als Produktionsausschuss oder als End-of-Life-Energiespeicher, insbesondere Lithium-Ionen-Akkumulatoren pyrolytisch aufzuschließen, um aus diesen Energiespeichern Sekundärrohstoffe, beispielsweise Metalle, ggf. Carbon und Elektrolyte oder auch andere Stoffe zurück zu gewinnen. Dabei dient die thermische Behandlungsanlage 1 lediglich dem pyrolytischen Aufschluss der Energiespeicher. Die Separation der zurück zu gewinnenden Rohstoffe erfolgt nachgeschaltet in einer dafür ausgelegten Aufbereitung. In der nachgeschalteten Aufbereitung werden die Sekundärrohstoffe aus dem pyrolytisch aufgeschlossenen Material mit an sich bekannten Methoden zurückgewonnen. Die nachfolgende Aufbereitung ist in der Figur nicht gezeigt.

Die thermische Behandlungsanlage 1 umfasst einen indirekt beheizten Ofen 2, an den bei dem dargestellten Ausführungsbeispiel eine Kühlstrecke 3 angeschlossen ist bzw. der in die Kühlstrecke 3 übergeht. Der Ofen 2 ist als Tunnelofen und die Kühlstrecke 3 als Tunnelkühlstrecke ausgelegt. Eine in der Figur nicht dargestellte Fördereinrichtung fördert in den Ofen 2 eingebrachte pyrolytisch aufzuschließende Energiespeicher durch den Ofen 2 und die Kühlstrecke 3. Hierbei kann es sich beispielsweise um einen Kettenförderer handeln. Eingesetzt werden kann hierzu letztendlich jedwede Fördereinrichtung, die den in dem Ofen auftretenden Temperaturen und den darin entstehenden Gasen standhält. Am Eingang des Ofens 2 befindet sich eine Eingangsschleuse 4. Am Ausgang der Kühlstrecke 3 befindet sich eine Ausgangsschleuse 5. Die Transporteinrichtung erstreckt sich durch den durch den Ofen 2 und die Kühlstrecke 3 gebildeten thermischen Behandlungstunnel von der Eingangsschleuse 4 bis zur Ausgangsschleuse 5. Zwischen der Eingangsschleuse 4 und dem Ofen 2 befindet sich eine Verschlussklappe 6, durch die in ihrer Geschlossen-Stellung das Ofeninnere - die thermische Behandlungskammer - gegenüber der Schleuse 4 gasdicht verschlossen ist. Eine Eingangstür 7 schließt mit der Schleuse 4 in ihrer Geschlossen-Stellung jedenfalls gasdicht. In gleicher Weise ist die Ausgangsschleuse 5 an den Ausgang der Kühlstrecke 3 ebenfalls mit einer Verschlussklappe 8 und gegenüber der Umgebung mit einer Ausgangstür 9 gasdicht abgeschlossen. Bei den Schleusen 4, 5 kann die Verschlussklappe 6, 8 bzw. die Tür 7, 9 nur geöffnet werden, wenn der jeweils andere Verschlusskörper der jeweiligen Schleuse 4 bzw. 5 sich in seiner Geschlossen-Stellung befindet.

Die indirekte Beheizung des Ofens 2 wird dadurch realisiert, dass die Ofenmuffel, deren Innenwand die Behandlungskammer einfasst, von außen erwärmt wird. Bei der von der Ofenmuffel abgegebenen Wärme handelt es sich sodann um Strahlungswärme. Die Ofenmuffel dient zugleich zur homogenen Verteilung der eingebrachten Wärme über den Umfang der Ofenmuffel, zumindest unterstützt die indirekte Beheizung der Ofenmuffel die Wärmeverteilung. Die Erwärmung der Ofenmuffel kann auf unterschiedliche Weise erfolgen. Bei dem dargestellten Ausführungsbeispiel ist vorgesehen, dass elektrische Heizstrahler auf die Außenseite der Ofenmuffel gerichtet oder an dieser unmittelbar angebracht sind. In die Ofenmuffel sind zudem Fluidwegsamkeiten eingebracht, durch die erwärmtes Gas durchgeleitet werden kann, mit dem die Ofenmuffe und damit die für die Wärmestrahlung erforderliche Wärme in diese eingebracht werden kann. Das heiße Gas wird in einer thermischen Nachverbrennung generiert. Mithin wird durch die thermische Nachverbrennung zugleich der Ofen 2 beheizt. Dabei dient die elektrische Heizeinrichtung zum Erwärmen des Ofens 2 auf seine Betriebstemperatur. Diese Temperatur kann durch die durch eine thermische Nachverbrennung gewonnene Wärmeenergie aufrechterhalten werden. Auch können Temperaturschwankungen in dem aus der thermischen Nachverbrennung stammenden Heizgas mit der elektrischen Heizeinrichtung kompensiert werden können.

Die Behandlungskammer des Ofens 2 ist in zwei Temperaturzonen 10, 11 unterteilt. Die beiden Temperaturzonen 10, 11 sind durch eine Tür 12 voneinander getrennt. Diese muss nicht gasdicht sein. Die Tür 12 dient bei dem dargestellten Ausführungsbeispiel einer gewissen Abschottung der beiden Temperaturzonen 10, 11 voneinander. Die Temperaturzone 10 ist ihrerseits in drei Heizzonen 10.1, 10.2, 10.3 unterteilt. Die Temperaturzone 11 ist bei dem dargestellten Ausführungsbeispiel ebenfalls in drei Heizzonen 11.1, 11.2, 11.3 unterteilt. Die Temperatur im Ofen 2 ist in der Temperaturzone 10 geringer als in der Temperaturzone 11. Folglich braucht die Temperaturzone 10 auch nur auf eine geringere Temperatur erwärmt zu werden, was zur Folge hat, dass eine Aufrechterhaltung der für die Temperaturzone 10 vorgesehenen Temperatur die bei der thermischen Nachverbrennung erzeugten heißen Gase mit einer geringeren Wärmemenge aufrechterhalten werden kann als in der Temperaturzone 11.

Die thermische Behandlung 1 verfügt ferner über eine Absaugeinrichtung 13, mit der bei der Erwärmung der durch den Ofen 2 transportierten Energiespeicher im Zuge ihrer Erwärmung entstehende Gase abgezogen werden. Bei dem dargestellten Ausführungsbeispiel ist die Absaugung in jeder Temperaturzone 10, 11 nicht nochmals in Bezug auf die einzelnen Heizzonen 10.1 - 10.3 bzw. 11.1 - 11.3 unterteilt. Auch dieses ist möglich. Bei der insgesamt mit dem Bezugszeichen 13 gekennzeichneten Absaugeinrichtung werden in einem ersten Absaugzweig 14 aus dem der Heizzone 10 zugeordneten Teil der Behandlungskammer entstehende Gase abgezogen. Der zweite Absaugzweig 15 dient zum Absaugen von Gasen aus dem Teil der Behandlungskammer, der durch die Temperaturzone 11 gebildet ist. Beide Absaugzweige 14, 15 sind über Absaugleitungen an eine thermische Nachverbrennung 16 angeschlossen. Der Absaugzweig 14 kann derart betrieben werden, dass das abgesaugte Abgas auf direktem Wege der thermischen Nachverbrennung 16 zugeleitet wird. In einer anderen Betriebsweise wird das über den Absaugzweig 14 abgesaugte Gas über einen Oberflächenkondensator 17 geleitet, um durch Kondensation in dem Gas enthaltene Stoffe, im vorliegenden Fall Elektrolyte, zurück zu gewinnen, bevor das Abgas anschließend der thermischen Nachverbrennung 16 zugeführt wird. Der thermischen Nachverbrennung 16 zugeordnet ist ein Wärmetauscher 18, durch den durch die thermische Nachverbrennung 16 entstandene Wärme zurückgewonnen wird. Die zurückgewonnene Wärme wird, wie vorstehend ausgeführt, zur Beheizung des Ofens 2 verwendet. Die indirekte Beheizung des Ofens 2 erfolgt somit durch die zurückgewonnene Wärme, die als heißes Gas durch entsprechende Heizwegsamkeiten in der Ofenmuffel um die Behandlungskammer des Ofens 2 geführt sind.

Der Übersicht halber sind in der Figur weitere Aggregate, die für den Betrieb der thermischen Behandlungsanlage 1 eingesetzt werden, beispielsweise ein Flusssäurekondensator oder dergleichen, nicht dargestellt.

Die in der thermischen Behandlungsanlage pyrolytisch aufzuschließenden Energiespeicher werden batchweise in einem Gebinde, beispielsweise einer Gitterbox, in der eine Vielzahl derartiger Energiespeicher enthalten sind, durch die Eingangstür 7 in die Eingangsschleuse 4 eingeführt. Die Verschlussklappe 6 ist bei geöffneter Eingangstür 7 geschlossen, wie durch den Blockpfeil an der Eingangstür 7 dargestellt. Ist ein solches Gebinde in die Schleuse 4 eingebracht, wird diese mit einem inerten Gas, beispielsweise Stickstoff, geflutet. Die thermische Behandlungsanlage 1 wird taktweise betrieben, und zwar dergestalt, dass die auf der Fördereinrichtung befindlichen bzw. daran angeschlossenen Gebinde unabhängig von ihrer Position innerhalb der thermischen Behandlungsanlage in einem vorgegebenen Takt jeweils über die Strecke einer Heizzone 10.1 - 10.3, 11.1 - 11.3 gefördert werden. Die Transportrichtung ist in der Figur mit einem Blockpfeil T kenntlich gemacht. Da der in dem Ausführungsbeispiel gezeigte Ofen 2 sechs Heizzonen 10.1 - 10.3, 11.1 - 11.3 aufweist, sind sechs Fördertakte erforderlich, damit ein mit pyrolytisch aufzuschließenden Energiespeichern befülltes Gebinde die Behandlungskammer des Ofens 2 durchlaufen hat.

In der ersten Temperaturzone 10 werden die Energiespeicher bei dem dargestellten Ausführungsbeispiel bis auf eine Temperatur von etwa 200 °C erwärmt. Während des Durchlaufes eines mit Energiespeichern befüllten Gebindes durch die Heizzonen 10.1, 10.2 und 10.3, wobei das Gebinde in jeder Heizzone für eine gewisse Zeit entsprechend dem vorgegebenen Förder- bzw. Erwärmungstakt verbleibt, werden diese sukzessive bis zu der genannten Temperatur erwärmt. Bei etwa 160-180 °C, welche Temperatur in der zweiten Heizzone 10.2 erreicht wird, öffnen die Zellen der Energiespeicher aufgrund des bei dieser Temperatur bereits recht hohen Dampfdruckes des Elektrolyten. In der dritten Heizzone 10.3 erreichen die Energiespeicher eine Temperatur von etwa 200 °C. In der ersten Temperaturzone 10 erfolgt vornehmlich eine Verdampfung von in den Energiespeichern enthaltenen Stoffen. Hierbei handelt es sich insbesondere um die Elektrolyte Ethylmethylcarbonat, Ethylencarbonat und/oder Dimethylcarbonat. Über den Absaugzweig 14 werden diese aus der Behandlungskammer abgesaugt und bei einem Betrieb des Absaugzweiges 14 über den Kondensator 17 an diesem zumindest teilweise zurückgewonnen. Der Verdampfungsprozess wird in diesem Teil der Behandlungskammer des Ofens 2 - in der Temperaturzone 10 - unter geringfügig erhöhtem Überdruck gegenüber dem Umgebungsdruck, und zwar bei dem dargestellten Ausführungsbeispiel von 5 mbar ausgeführt, damit von außen keine Gase, insbesondere Sauerstoff in die Behandlungskammer eintreten können. Dieses erfolgt vor dem Hintergrund, dass der Verdampfungsprozess unter reduzierenden atmosphärischen Bedingungen innerhalb der Behandlungskammer durchgeführt wird. Die reduzierenden Gase werden durch die Verdampfungsprodukte selbst bereitgestellt. Durchaus möglich ist auch, dass zum Einstellen der gewünschten reduzierenden Atmosphäre über eine Stoffzufuhr ein entsprechendes Gas oder ein Gas-Precursor in die erste Temperaturzone der Behandlungskammer eingebracht wird. Für die Überdrucksteuerung ist in der Behandlungskammer ein Drucksensor angeordnet. Eingestellt wird der in der Behandlungskammer vorgesehene Druck über den Betrieb der Absaugeinrichtungen 13 über ihren Absaugzweig 14.

Eine reduzierende Atmosphäre wird auch in dem Teil der Behandlungskammer, in dem sich die zweite Temperaturzone 11 befindet, benötigt, die ebenfalls mit einem geringen Überdruck von wenigen mbar, bei dem beschriebenen Ausführungsbeispiel von 5 mbar betrieben wird. Im Anschluss an die Verdampfungsphase schließt sich die pyrolytische Zersetzungsphase der noch vorhandenen Bestandteile der aufzuschließenden Energiespeicher an. Dieses erfolgt in der zweiten Temperaturzone 11, deren Heizzone 11.1 die Energiespeicher auf eine Temperatur von etwa 300 bis 350 °C erwärmt. Zersetzt werden hierbei u.a. die in einem solchen Energiespeicher enthaltenen Kunststoffe, typischerweise **PP** und/oder PE. Zudem werden die aktiven Substanzen zersetzt. Aufgrund der Zersetzung der als Separatoren eingesetzten Kunststoffe werden, sollten die Energiespeicher zuvor nicht restentladen worden sein, diese durch die dabei entstehenden Kurzschlüsse restentladen. Die dabei entstehende thermische Energie wird für die Beheizung dieser und der folgenden Heizzonen 11.1, 11.2, 11.3 genutzt. Infolge der pyrolytischen Zersetzung entstehen als Gase beispielsweise Kohlenmonoxid, Kohlendioxid, Wasserstoff, Methan, Ethan und Crackgase aus der PP-/PE-Zersetzung. Methan, Ethan und die Crackgase sind Kohlenwasserstoffverbindungen, die über den Absaugzweig 15 der thermischen Nachverbrennung 16 zugeführt und dort zur Wärmegewinnung für die Ofenbeheizung verbrannt werden. Durch den Verbrennungsprozess in der thermischen Nachverbrennung 16 werden die Abgase gereinigt. Die reduzierende Atmosphäre in der zweiten Temperaturzone 11, die ebenfalls durch die Zersetzungsprodukte von selbst generiert wird, wird aufrechterhalten, damit die durch den Zersetzungsprozess frei werdenden Metalle möglichst keine oxidischen Verbindungen eingehen. Untersuchungen haben gezeigt, dass durch diese Maßnahme der Anteil an Metalloxiden in dem pyrolytisch aufgeschlossenen Material gegenüber anderen Aufschlussverfahren signifikant reduziert ist. Die Nicht-Oxid-Metallverbindungen lassen sich in der nachgeschalteten Aufbereitung zumindest mehrheitlich in einfacher Weise durch einen Magnetabscheider nach einem vorangegangenen Zerkleinerungsvorgang von dem aufgeschlossenen Material separieren.

Um die reduzierende Atmosphäre in der Behandlungskammer des Ofens 2 einzustellen, wird die Absaugeinrichtung 13 mit ihren Absaugzweigen 14, 15 entsprechend betrieben. Dieses bedeutet, dass nur ein solcher Abgasvolumenstrom aus dem jeweiligen Teil der Behandlungskammer des Ofens 2 abgezogen wird, dass die reduzierende Atmosphäre und der geringe Überdruck in dem gewünschten Maße erhalten bleiben. Zu diesem Zweck sind in den Temperaturzonen 10, 11 Sensoren installiert, durch die die Einstellung der reduzierenden Atmosphäre kontrolliert wird (in der Figur nicht dargestellt). Hierbei kann es sich beispielsweise um Sauerstoffsensoren handeln. Angeschlossen sind diese an eine zentrale Steuereinrichtung, über die die thermische Behandlungsanlage gesteuert wird. Durch die reduzierende Atmosphäre werden zugleich vor allem in der Temperaturzone 10 stattfindende Restentladungen kontrolliert. Die Erwärmung der aufzuschließenden Energiespeicher in der zweiten Temperaturzone 11 erfolgt bis auf eine Temperatur von etwa 600 °C. Diese Temperatur liegt deutlich unterhalb der Schmelztemperatur von Aluminium (ca. 660 °C) als aus der Gruppe der Metalle und Übergangsmetalle niedrig schmelzende Metall in den thermisch auszuschließenden Energiespeichern. Dieses wird somit bei dem pyrolytischen Aufschluss nicht aufgeschmolzen, was für die nachgeschaltete Aufbereitung von Vorteil ist.

In die zweite Temperaturzone 11 der Behandlungskammer wird CO₂ eingeleitet, damit zumindest Teile der rück zu gewinnenden Metalle, wie beispielsweise Lithium als Carbonate, beispielsweise Lithiumcarbonat gebunden werden.

Die Behandlungskammer des Ofens 2 ist durch eine gasdichte Tür 19 von der Kühlstrecke 3 getrennt. Aufgrund des Überdruckbetriebes des Ofens 2 in seiner Behandlungskammer ist Sorge dafür getragen, dass kaum kühlere Luft und auch kein Sauerstoff in die Behandlungskammer eingetragen werden, wenn die Tür 19 kurzzeitig zum Durchlassen eines Gebindes geöffnet wird. In der Kühlstrecke 3 werden die pyrolytisch aufgeschlossenen Energiespeicher bis auf Umgebungstemperatur gekühlt. Dieses ist vom Grundsatz her eine Sicherheitsmaßnahme. Allerdings erlaubt diese Maßnahme, dass die aus der Ausgangsschleuse 5 aus der thermischen Behandlungsanlage 1 herausgebrachten pyrolytisch aufgeschlossenen Energiespeicher unverzüglich der weiteren Aufbereitung zugeführt werden können. Aufgrund des pyrolytischen Aufschlusses und der dadurch bedingten Inaktivierung der Elektrolyte und der reaktiven Substanzen ist dieses ungefährlich.

Bei dem dargestellten Ausführungsbeispiel ist an die Kühlstrecke 3 ein dritter Absaugzweig 20 der Absaugeinrichtung 13 angeschlossen. Zudem mündet in die Kühlstrecke 3 eine Stoffzufuhr 21, über die ein Stoff zur Beeinflussung des pyrolytisch aufgeschlossenen Materials zugeführt werden kann. Zugeführt werden kann, wenn gewünscht, ein zusätzliches Kühlmittel, beispielsweise Wasser. Es versteht sich, dass mehrere Stoffzufuhren in die Kühlstrecke 3 münden können. In einer Ausgestaltung ist vorgesehen, dass über eine solche Stoffzufuhr 21 CO₂ zugeführt wird, um in dem pyrolytisch aufgeschlossenen Material zurückzugewinnende Metalle, insbesondere vorhandenes Lithium in eine metastabile Verbindung, im Falle von Lithium in eine metastabile Lithiumverbindung zu wandeln. Dieses erleichtert die Separierung des Lithiums in dem nachgeschalteten Aufbereitungsprozess.

Stoffzufuhren können auch in die Temperaturzonen 10, 11 der Behandlungskammer des Ofens 2 vorgesehen sein, wenn Einfluss auf die Atmosphäre und/oder den Verdampfungs- bzw. Zersetzungsprozess genommen werden soll.

Bei der thermischen Behandlung der aufzuschließenden Energiespeicher wird deren Restentladung in der ersten Temperaturzone 10 für die Erwärmung derselben genutzt. Um in einem kontinuierlichen pyrolytischen Aufschlussprozess durch die Restentladung in den aufeinanderfolgenden Gebinden eine ähnliche thermische Energiezufuhr zu bewirken, sind die in einem solchen Gebinde befindlichen Energiespeicher unterschiedlicher Beschaffenheit, d.h.: darin befinden sich unterschiedlich ausgelegte Energiespeicher, und zwar bezüglich ihrer elektrischen Speicherdichte und ihrer Restladung. Es versteht sich, dass mit der thermischen Behandlungsanlage 1 auch Gebinde mit Sortenreinen Energiespeichern pyrolytisch aufgeschlossen werden können.

Die thermische Behandlungsanlage 1 wird bezüglich ihrer Temperaturführung so betrieben, dass die Behandlungskammer des Ofens 2, die Kühlstrecke 3 und die Schleusen 4, 5 oberhalb des Taupunktes von Flusssäure gehalten sind. Entstehende Flusssäure wird über die Absaugeinrichtung 13 aus der Behandlungskammer abgezogen und in einem der thermischen Nachverbrennung nachgeschalteten Absorber aus dem Abgas entfernt. Bei dem beschriebenen Ausführungsbeispiel wird hierfür eine Calzium-Carbonat-Schüttung verwendet, in der die kondensierte Flusssäure in Salze umgewandelt wird.

Die Erfindung ist anhand eines Ausführungsbeispiels unter Bezugnahme auf die Figuren beschrieben worden. Ohne den Umfang der geltenden Ansprüche zu verlassen, ergeben sich für einen Fachmann zahlreiche weitere Möglichkeiten, die Erfindung umzusetzen, ohne dass dieses im Rahmen dieser Ausführungen näher erläutert werden müsste.

### Bezugszeichenliste

- 1: Thermische Behandlungsanlage
- 2: Ofen
- 3: Kühlstrecke
- 4: Eingangsschleuse
- 5: Ausgangsschleuse
- 6: Verschlussklappe
- 7: Eingangstür
- 8: Verschlussklappe
- 9: Ausgangstür
- 10: Erste Temperaturzone
- 10.1, 10.2, 10.3: Heizzone
- 11: Zweite Temperaturzone
- 11.1, 11.2, 11.3: Heizzone
- 12: Tür
- 13: Absaugeinrichtung
- 14: Absaugzweig
- 15: Absaugzweig
- 16: Thermische Nachverbrennung
- 17: Kondensator
- 18: Wärmetauscher
- 19: Tür
- 20: Absaugzweig
- 21: Stoffzufuhr

- T: Blockpfeil Transportrichtung

## Patentansprüche

1. Verfahren zum thermischen Behandeln von elektro-chemischen Energiespeichern im Zusammenhang mit einem anschließenden Zurückgewinnen von darin enthaltenen Wertstoffen als Sekundärrohstoffe, bevor in einem nachgeschalteten Prozess das thermisch behandelte Material einer Aufbereitung unterworfen wird, durch die in dem thermisch behandelten Material befindliche Sekundärrohstoffe voneinander getrennt werden, **dadurch gekennzeichnet, dass** die thermische Behandlung in einem indirekt beheizten Ofen (2) unter atmosphärischen Druckbedingungen oder einem geringen Überdruck gegenüber dem Umgebungsdruck von bis zu 20 mbar und in reduzierender Atmosphäre durchgeführt wird und dass über die reduzierende Atmosphäre als Steuergröße Einfluss auf den Verlauf des thermischen Behandlungsprozesses genommen wird.

2. Verfahren nach Anspruch 1, **dadurch gekennzeichnet, dass** die reduzierende Atmosphäre in dem Ofen (2) über eine Absaugeinrichtung (13) zum Abziehen von durch die thermische Behandlung entstehenden Gasen gesteuert wird.

3. Verfahren nach Anspruch 1 oder 2, **dadurch gekennzeichnet, dass** die thermische Behandlung in mehreren aufeinanderfolgenden Temperaturzonen (10, 11) vorgenommen wird und die aufzuschließenden Energiespeicher in jeder Temperaturzone (10, 11) für eine gewisse Zeitspanne verbleiben, bevor die Behandlung in der nächsten Temperaturzone (10, 11) fortgesetzt wird.

4. Verfahren nach Anspruch 2 oder 3, **dadurch gekennzeichnet, dass** die aus dem Ofen (2) abgesaugten Gase einer thermischen Nachverbrennung (16) zugeführt werden und die dabei entstehende Wärme über einen Wärmetauscher (18) für die Beheizung des Ofens (2) genutzt wird.

5. Verfahren nach Anspruch 3 und 4, **dadurch gekennzeichnet, dass** in einer ersten Temperaturzone (10) die aufzuschließenden Energiespeicher zum Verdampfen von darin enthaltenem organischem Elektrolytmaterial erwärmt werden und dass in einer nachfolgenden Temperaturzone (11) der weitere thermische Aufschluss bei gegenüber der Temperatur in der ersten Temperaturzone (10) höherer Temperatur zum Zersetzen von in der ersten Temperaturzone (10) entstandenen Verdampfungsprodukten und/oder Produktresten sowie vorhandener Kunststoffe vorgenommen wird.

6. Verfahren nach einem der Ansprüche 3 bis 5, **dadurch gekennzeichnet, dass** im Anschluss an die Temperaturzone (11), in der die aufzuschließenden Energiespeicher auf ihre maximale Temperatur erwärmt werden, die thermisch aufgeschlossenen Energiespeicher gekühlt werden.

7. Verfahren nach einem der Ansprüche 1 bis 6, **dadurch gekennzeichnet, dass** über eine Absaugeinrichtung (13) während des Prozesses der thermischen Behandlung innerhalb des Ofens (2) durch den thermischen Aufschluss der Energiespeicher entstehende Gase abgesaugt und aus dem abgesaugten Gas darin enthaltene Verdampfungs- und/oder Zersetzungsprodukte, insbesondere Elektrolyte, durch Kondensation zurückgewonnen werden.

8. Verfahren nach einem der Ansprüche 1 bis 7, **dadurch gekennzeichnet, dass** zur Beeinflussung der thermischen Behandlung Reaktionsstoffe in einer Behandlungskammer des Ofens (2) oder diejenige einer Kühlstrecke (3) eingebracht werden.

9. Verfahren nach einem der Ansprüche 1 bis 8, **dadurch gekennzeichnet, dass** als Ofen (2) ein als Durchlaufofen konzipierter Tunnelofen verwendet wird, durch den die thermisch aufzuschließenden Energiespeicher in Gebinden mit einer Fördereinrichtung transportiert werden.

10. Verfahren nach einem der Ansprüche 1 bis 9, **dadurch gekennzeichnet, dass** zum Zurückgewinnen der in den thermisch aufgeschlossenen Energiespeicher enthaltenen Sekundärrohstoffe, dem thermischen Aufschlussprozess nachgeschaltet, eine Aufbereitung der thermisch aufgeschlossenen, inaktivierten Energiespeicher durchgeführt wird.

11. Behandlungsanlage zum thermischen Behandeln von elektro-chemischen Energiespeichern, umfassend:
• einen indirekt beheizten Ofen (2) mit zumindest einer von der Ofenumgebung atmosphärisch getrennten thermischen Behandlungskammer für eine thermische Behandlung in reduzierender Atmosphäre,
• eine Erwärmungseinrichtung zum indirekten Zuführen von Wärme in die Behandlungskammer,
• eine Absaugeinrichtung (13) zum Absaugen von bei der thermischen Behandlung der elektro-chemischen Energiespeicher in der Behandlungskammer entstehenden gasförmigen Verdampfungs- und Zersetzungsprodukten und
• eine Einrichtung zum Überwachen und Steuern der in der Behandlungskammer herrschenden Atmosphäre.

12. Behandlungsanlage nach Anspruch 11, **dadurch gekennzeichnet, dass** der Ofen (2) ein als Durchlaufofen konzipierter Tunnelofen mit mehreren, in Förderrichtung der thermisch zu behandelnden Energiespeicher aufeinanderfolgenden Temperaturzonen (10, 11) unterschiedlicher Erwärmungstemperatur ist.

13. Behandlungsanlage nach Anspruch 12, **dadurch gekennzeichnet, dass** eine erste Temperaturzone (10) zum Erwärmen der aufzuschließenden Energiespeicher auf die Elektrolytverdampfungstemperatur vorgesehen ist und dass die Absaugeinrichtung (13) die aus dieser ersten Temperaturzone (10) abgesaugten gasförmigen Verdampfungsprodukte an einen Kondensator (17) zum Kondensieren von verdampftem Elektrolytmaterial fördert.

14. Behandlungsanlage nach Anspruch 13, **dadurch gekennzeichnet, dass** sich an die Temperaturzone (11), in der die thermisch zu behandelnden elektro-chemischen Energiespeicher auf ihre Maximaltemperatur erwärmt werden, eine Kühlstrecke (3) anschließt.

15. Behandlungsanlage nach einem der Ansprüche 11 bis 14, **dadurch gekennzeichnet, dass** in die Behandlungskammer des Ofens (2) eine oder mehrere Stoffzufuhren (21) münden, über die Stoffe zum Beeinflussen der thermischen Behandlung der Energiespeicher zugeführt werden können.
